# EUROPÄISCHE PATENTSCHRIFT

(11) **EP 0 449 854 B1**
(45) Veröffentlichungstag und Bekanntmachung des Hinweises auf die Patenterteilung: **21.07.1993**
(21) Anmeldenummer: 90900013.5
(22) Anmeldetag: 19.12.1989
(51) Int. Cl.: A21C 5/04

(54) **VORRICHTUNG ZUM PORTIONIEREN VON TEIG**
DOUGH-DIVIDING MACHINE
DISPOSITIF POUR PREPORTIONNER LA PATE

(30) Priorität: 20.12.1988 AT 3107/88
(43) Veröffentlichungstag der Anmeldung: 09.10.1991
(73) Patentinhaber: König, Elisabeth, A-8045 Graz (AT)
(72) Erfinder: SCHNIDER, Karl, A-8010 Graz (AT)
(74) Vertreter: Wildhack, Helmut, Dipl.-Ing. Dr.
(86) Internationale Anmeldenummer: AT8900123
(87) Internationale Veröffentlichungsnummer: WO9006684

(56) Entgegenhaltungen:
- EP-A- 0 273 761
- DE-A- 2 943 088
- US-A- 3 558 016
- US-A- 4 494 920

## Beschreibung

Die Erfindung bezieht sich auf eine Vorrichtung zum Portionieren von Teig, mit einer in einem Gestell um eine horizontale Achse drehbar gelagerten Trommel, die an ihrem Mantel, vorzugsweise zur Trommelachse parallelen in Reihen, angeordnete Aufnahmeöffnungen für den Teig hat, in denen Kolben in radialer Richtung der Trommel beweglich geführt sind, in welche Aufnahmeöffnungen der Teig aus einer an einen Einfülltrichter anschließenden Kammer mittels eines Eindrückwerkzeuges in seitlicher Richtung eingedrückt wird, das durch einen Antrieb zu einer hin- und hergehenden Bewegung angetrieben wird.

Bei solchen bekannten Vorrichtungen (z.B. AT-B 341 970, DE-A 2 943 089) ist dieses Eindrückwerkzeug von einem annähernd in horizontaler Richtung hin und her bewegten Kalben gebildet. Wird dieser Kolben zurückgezogen, so kann Teig in die Kammer, z.B. mittels eines am unteren Endes des Trichters oberhalb der Kammer befindlichen Sternwalzenpaares, zugeführt werden. Bei seiner Vorschubbewegung schließt der Kolben dann die Kammer ab und drückt den Teig in die Aufnahmeöffnungen ein. Eine solche Konstruktion hat sich bewährt, hat jedoch den Nachteil eines verhältnismäßig großen Platzbedarfes in Längsrichtung des Kolbens, der durch die Hin- und Herbewegung des Kolbens bedingt ist.

Die Erfindung setzt sich zur Aufgabe, bei einer Vorrichtung der eingangs geschilderten Art die Abmessungen in horizontaler Richtung normal zur Trommelachse wesentlich zu verringern, ohne den Aufwand zu vergrößern. Außerdem soll eine verbesserte Saugwirkung auf den im Einfülltrichter befindlichen Teig bei der Rückzugbewegung des Eindrückwerkzeuges hervorgerufen werden, sodaß die Einsaugung des Teiges aus dem Einfülltrichter in die Kammer verbessert wird. Die Erfindung löst diese Aufgabe dadurch, daß das Eindrückwerkzeug um eine einzige horizontale, zur Achse der Trommel parallele, unterhalb der Kammer angeordnete Achse schwenkbar im Gestell gelagert ist. Während beim eingangs erwähnten Stand der Technik das Eindrückwerkzeug eine geradlinige Hin- und Herbewegung vollführt, liegt beim Erfindungsgegenstand eine Schwenkbewegung um eine ortsfeste Achse vor. Bei sinnvoller Wahl der Lage dieser Achse unter der Kammer wird im Vergleich zum bekannten Stand der Technik eine wesentliche Verringerung der Baulange der Vorrichtung in horizontaler Richtung, normal zur Trommelachse gemessen, erzielt und zugleich die Einsaugung des Teiges in die Kammer begünstigt, da die erwähnte Schwenkbewegung eine Komponente beinhaltet, die von der Kammer weg nach unten gerichtet ist, wogegen eine solche Bewegungskomponente beim bekannten Stand der Technik fehlt. Es ist daher beim Erfindungsgegenstand möglich, auf die im Einfülltrichter bzw. im Anschluß an dessen unteres Ende angeordneten Sternwalzen zu verzichten, da die erwähnte Saugwirkung auf den im Einfülltrichter befindlichen Teig für eine verläßliche Teignachförderung in die Kammer in den meisten Fällen ausreicht, insbesondere, wenn gemäß einer bevorzugten Ausführungsform der Erfindung die Achse, um welche das Eindrückwerkzeug schwenkbar ist, in der Draufsicht gesehen, unter jener Hälfte der Kammer liegt, welche der Trommel benachbart ist, da auf diese Weise die Schwenkachse für das Eindrückwerkzeug so nahe wie möglich an die Trommel herangerückt wird, so daß die von der Trommel weg gerichtete Rückzugsbewegung des Eindrückwerkzeuges eine erhebliche Komponente in vertikaler Richtung hat. Diese Verkürzung der Baulänge tritt umso deutlicher auf, je mehr die Schwenkachse des Eindrückwerkzeuges der Trommel benachbart ist.

Gemäß einer Weiterbildung der Erfindung ist die Anordnung so getroffen, daß die Achse, um welche das Eindrückwerkzeug schwenkbar ist, zumindest annähernd im Schnittpunkt zweier gedachter Verlängerungen zweier Wände des Einfülltrichters liegt, von denen die eine die der Trommel benachbarte, vorzugsweise vertikal, Wand ist, wogegen die andere die dieser Wand gegenüberliegende Wand des Einfülltrichters ist.

Die Schwenkbewegung des Eindrückwerkzeuges hat aber auch den Vorteil, daß mit geringem Aufwand eine Sicherung dagegen geschaffen werden kann, daß der Teig bei der Eindrückbewegung des Eindrückwerkzeuges übermäßig stark zusammengedrückt wird. Um dies zu erreichen, ist erfindungsgemäß das Eindrückwerkzeug mit einem um dieselbe Achse hin- und herschwingenden Schwenkteil über einen hydraulischen Dämpfer gekuppelt, wobei der Antrieb auf den Schwenkteil und dieser über den hydraulischen Dämpfer auf das Eindrückwerkzeug beim Eindrücken des Teiges in die Aufnahmeöffnungen einwirkt, und wobei das Eindrückwerkzeug und der Schwenkteil über einen Mitnehmer bei der Rückführbewegung des Schwenkteiles gekuppelt sind. Gemäß einer vorteilhaften Weiterbildung der Erfindung ist hiebei die Anordnung so getroffen, daß der hydraulische Dampfer einen durch eine Feder belasteten Kolben hat, der in einem im Eindrückwerkzeug vorgesehenen Druckraum geführt ist und am Schwenkteil anliegt, wobei dieser Druckraum einerseits über eine mit einem Rückschlagventil versehene Leitung, anderseits über eine weitere, mit einem, vorzugsweise einstellbaren, Druckregelventil versehene Leitung mit einem Flüssigkeitsspeicher in Verbindung steht. Da das Eindrückwerkzeug verhältnismäßig hoch beansprucht ist und daher in der Regel entsprechend stark ausdebildet ist, steht im Eindrückwerkzeug für die Unterbringung dieses Kolbens genügend Platz zur Verfügung.

Schwenkbare Eindrückwerkzeuge sind an sich bekannt (US-A 3 558 016). Hiebei liegen jedoch zwei solche, im wesentlichen kreissektorförmige Eindrückwerkzeuge einander gegenüberliegend zu beiden Seiten eines vertikalen Teigeinzugsschachtes, der über der Trommel liegt. Das durch die Erfindung gelöste Problem einer Verkürzung der Baulänge bei gleichzeitiger Ansaugung des Teiges tritt hier nicht auf.

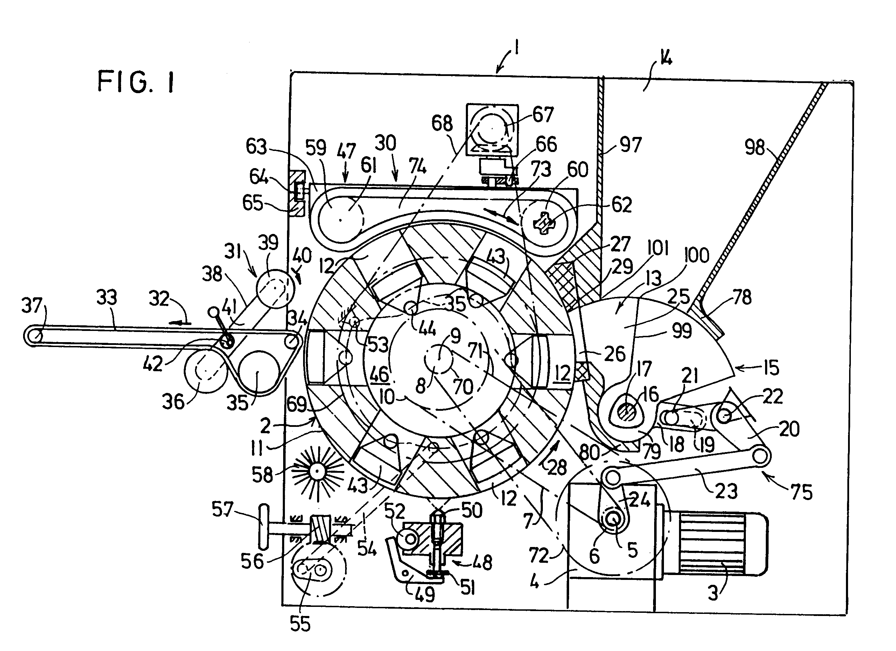

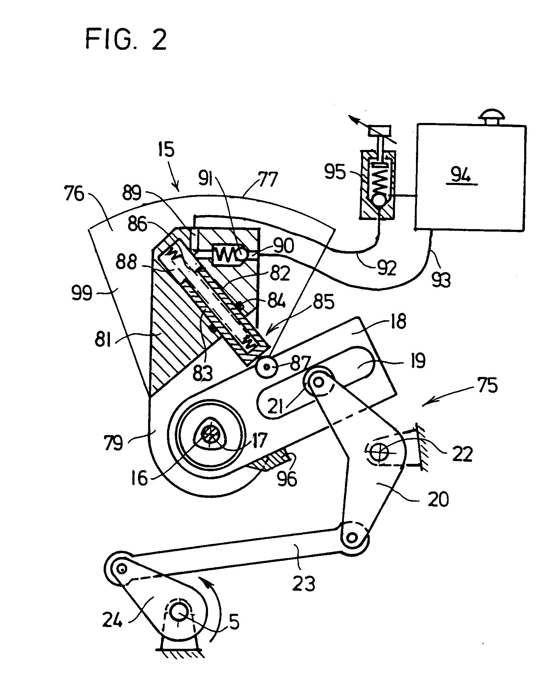

In der Zeichnung ist der Erfindungsgegenstand anhand eines Ausführungsbeispieles schematisch veranschaulicht. Fig.1 zeigt einen normal zur Trommelachse gelegten Vertikalschnitt durch die Vorrichtung, Fig.2 zeigt in größerem Maßstab im Detail die Ausbildung des Eindrückwerkzeuges.

In einem Gestell 1 (Fig.1) ist eine Trommel 2 mit horizontaler Achse 9 gelagert, welche Trommel von einem Elektromotor 3 mit regelbarem Getriebe 4 zur kontinuierlichen Umlaufbewegung angetrieben ist. Hiezu ist auf die Abtriebswelle 5 des Getriebes 4 ein Kettenrad 6 aufgekeilt, welches über eine Kette 7 eine auf die Welle 8 der Trommel 2 aufgekeilte Zahnscheibe 10 antreibt. Die Trommel 2 ist an ihrem Umfang 11 mit mehreren Aufnahmeöffnungen 12 mit Sechseckquerschnitt versehen, die in mehreren parallel zur Achse 9 verlaufenden Reihen, im dargestellten Ausführungsbeispiel in sechs Reihen zu je zwei Öffnungen 12, angeordnet sind, die in gleichem Abstand - gemessen in Umfangsrichtung der Trommel 2 - voneinander liegen. In diese Aufnahmeöffnungen 12 wird an einer Portionierstelle 13 von der Seite her Teig in horizontaler Richtung eingedrückt, der über einen Einfülltrichter 14 zugeführt wird. Hiezu dient ein einziges, später noch näher beschriebenes Eindrückwerkzeug 15, das auf eine Welle 16 verdrehbar aufgesetzt ist, die mit horizontaler, zur Achse der Trommel 2 paralleler Achse 17 im Gestell 1 gelagert ist. Auf dieser Welle 16 ist ein Schwenkteil 18 starr befestigt, der mit einer Kulisse 19 versehen ist, in die ein Doppelhebel 20 mit einer von seinem Arm getragenen Rolle 21 eingreift, der um eine Anlenkstelle 22 im Gestell 1 schwenkbar gelagert ist und an seinem anderen Ende mit einem Pleuel 23 gelenkig verbunden ist, das an eine Kurbel 24 angelenkt ist, die auf der Abtriebswelle 5 des Motors 3 befestigt ist. Der Schwenkteil 18 steht mit dem Eindrückwerkzeug 15 über einen hydraulischen Dämpfer 85 (Fig.2), welcher später noch näher beschrieben wird, derart in Verbindung, daß das Eindrückwerkzeug 15 eine taktweise Schwenkbewegung um die Achse 17 vollführt, durch welche der Teig in die Aufnahmeöffnungen 12 der Trommel 2 eindedrückt wird. Hiezu befindet sich unterhalb des Einfülltrichters 14 eine Kammer 25, in welche der Teig aus dem Einfülltrichter 14 bei der von der Trommel 2 weg gerichteten Schwenkbewegung des Eindrückwerkzeuges 15 eingesaugt wird und aus welcher das Eindrückwerkzeug 15 den Teig durch eine Durchgangsöffnung 26 einer Brille 27 aus Kunststoff in die Aufnahmeöffnungen 12 eindrückt, insbesondere, sobald das Eindrückwerkzeug 15 das untere Ende des Einfülltrichters 14 bzw. die Kammer 25 nach oben abgeschlossen hat. Die Aufnahmeöffnungen 12 laufen in Richtung des Pfeiles 28 an einer Abscherkante 29 der Brille 27 vorbei, welche die eigentliche Portionierung bewirkt und den überschüssigen Teig abstreift. Die Brille 27 ist seitlich aus dem Gestell 1 herausziehbar, um sie leicht reinigen zu können

Die Portionierstelle 13 ist an jener Seite der Trommel 2 angeordnet, an welcher sich die Aufnahmeöffnungen 12 nach oben bewegen. Im Bereich des Scheitels der Trommel 2 befindet sich eine Wirkstelle 30, an welcher die in den Aufnahmeöffnungen 12 liegenden Teigstücke einem Wirkvorgang unterworfen werden. Die fertig gewirkten Teigstücke werden an der der Portionierstelle 13 gegenüberliegenden Seite der Trommel 2 an einer Ablegestelle 31 aus den Aufnahmeöffnungen 12 auf ein in Richtung des Pfeiles 32 umlaufendes Förderband 33 abgelegt. Dieses von einer Antriebswalze 35 angetriebene Förderband 33 läuft über eine nahe der Trommel 2 angeordnete Umlenkwalze 34 und über eine Mitnahmerolle 36 sowie über eine weitere Umlenkwalze 37. Die Mitnahmerolle 36 treibt mittels eine Zahnriemens 38 eine Andrückwalze 39 in Richtung des Pfeiles 40 an, welche das sich aus der Aufnahmeöffnung 12 lösende Teigstück an das Förderband 33 drückt und dadurch für eine sichere Wegbewegung des Teigstücke von der Trommel 23 sorgt. Die Andrückwalze 39 ist an einem Schwenkarm 41 gelagert, dessen Neigung durch eine Exzenter 42 verstellbar ist, sodaß der Abstand der Andrückwalze 39 von der Trommel 2 bzw. vom Förderband 33 einstellbar ist.

In jeder Aufnahmeöffnung 12 befindet sich eine Kolben 43, der in radialer Richtung der Trommel 2 in der betreffenden Aufnahmeöffnung 12 verschiebbar ist. Jeder Kolben 32 tragt an seiner der Trommelachse 2 zugewendeten Seite eine Rolle 44, die in einer in sich geschlossenen Nut 45 einer Kurvenscheibe 46 geführt ist, die in der Trommel 2 verstellbar angeordnet ist. Diese Nut 45 ist in Fig. 1 durch eine strichpunktierte Linie lediglich schematisch angedeutet. Sie ergibt für jeden Kolben 43 eine solche Stellung in seiner Aufnahmeöffnung 12, welche durch den Abstand jener Stelle der Nut 45 von der Achse 9 der Trommel 2 bestimmt ist, an welcher sich die jeweilige Rolle 44 befindet. Dieser Abstand ändert sich während des kontinuierlichen Umlaufes der Trommel 2, da die Nut 45 einen gekrümmten Verlauf hat, etwa wie folgt: An der Portionierstelle 13 erfolgt ein Zurückziehen des Kolbens 43 in der Aufnahmeöffnung 12, um Platz für den durch das Eindrückwerkzeug 15 in die Aufnahmeöffnung 12 eingedrückten Teig zu schaffen. Das Maß, um welches der Kolben 43 hiebei zurückgezogen wird, bestimmt das Volumen des an der Portionierstelle 13 ausgemessenen Teigstückes pro Aufnahmeöffnung 12. Im Verlauf des weiteren Umlaufes der Trommel 2 bleibt der Kolben 43 im wesentlichen in seiner zurückgezogenen Lage, bis die betreffende Aufnahmeöffnung 12 in den Bereich der Wirkstelle 30 gelangt. Sodann wird zu Beginn des Wirkvorganges des Kolben 43 etwas vorgeschoben, um das zu wirkende Teigstück an das später noch näher beschriebene Wirkwerkzeug 47 anzudrücken. Sodann erfolgt im Verlaufe des Vorbeilaufens der Aufnahmeöffnung and der Wirkstelle 30 ein kontinuierliches Zurückziehen des Kolbens 43, um dem in der Aufnahmeöffnung 12 befindlichen Teigstück Gelegenheit zu geben, im Verlaufe des Wirkvorganges eine kugelige Form anzunehmen. Sobald die Aufnahmeöffnung 12 vor der Ablegestelle 31 angelangt ist, wird der Kolben 43 bis zum Umfang 11 der Trommel 2 vorgeschoben, so daß das fertig gewirkte Teigstück aus der Aufnahmeöffnung 12 ausgestoßen und mit Hilfe der Andrückwalze 39 auf das Förderband 33 abgelegt wird. Im Verlauf der weiteren Umdrehung der Trommel 2 verbleibt der Kolben 43 zunächst in der vorgeschobenen Stellung, bis er im Bereich des unteren Trommelscheitels wieder etwas zurückgezogen wird, um die Innenwand der Aufnahmeöffnung 12 für eine wirksame Beölung freizugeben, für welche eine Beölungsvorrichtung 48 unterhalb der Trommel 2 vorgesehen ist, die im Takt der vorbeilaufenden Aufnahmeöffnungen 12 Öl durch eine Düse 50 in die Aufnahmeöffnungen 12 spritzt. Die Düse 50 ist an eine Pumpe 51 für Öl angeschlossen, die durch einen Schwenkhebel 49 und eine Exzenterwelle 52 betätigt wird. Statt dieser Beölungsvorrichtung 48, oder gegebenenfalls mit ihr auswechselbar, kann eine Bemehlungsvorrichtung unterhalb der Trommel vorgesehen sein, die aus einer umlaufenden Bürste besteht, welcher Mehl über eine Schnecke zugeführt wird, wobei die Borsten dieser Bürste das Mehl gegen die vorbeilaufende Aufnahmeöffnung 12 schleudern.

Nach Passieren der Beölungsvorrichtung 48 gelangt die Aufnahmeöffnung 12 wieder zur Portionierstelle 13 und der Zyklus beginnt von Neuem.

Das Maß, um welches der Kolben 43 an der Portionierstelle 13 zurückgezogen wird, ist zur Veränderung des Gewichtes der portionierten Teigstücke einstellbar. Hiezu ist die Kurvenscheibe 46 an einer Stelle 53 im Gestell 1 schwenkbar angelenkt und mit einer Pleuelstange 54 gelenkig verbunden, deren anderes Ende an einer im Gestell 1 drehbar gelagerten Kurbel 55 angelenkt ist, die mittels eines Schneckentriebes 56 von einem Handrad 57 aus verstellbar ist.

Eine im Gestell 1 gelagerte, zur Drehbewegung angetriebene Bürste 58 streift am Umfang 11 der Trommel 2 anhaftende Teigreste ab.

Das Wirkwerkzeug 47 ist von einem endlosen Band 59, zweckmäßig einem aus einer Vielzahl von aneinander befestigten Platte gebildeten Gliederband gebildet, das über zwei Umlenkwalzen 60,61 geführt ist und zur Umlaufbewegung angetrieben ist, zweckmäßig von einem mit der Umlenkwalze 60 drehschlüssig verbundenen Zahnrad, das in einen mit dem Rand des Bandes 59 verbundenen Zahnriemen eingreift. Die Umlenkwalze 60 bzw. das mit ihr verbundene Zahnrad wird von einer Profilwelle 62 zur Drehbewegung angetrieben, die im Gestell 1 gelagert und von der Zahnscheibe 10 über nicht dargestellte Übersetzungsglieder so angetrieben ist, daß einer kontinuierlichen Drehbewegung eine weitere Komponente überlagert ist, die aus einer mit einer Beschleunigung periodisch abwechselnden Verzögerung der Umlaufbewegung des Bandes 59 besteht. Die beiden Umlenkwalzen 60,61 sind in einem gemeinsamen Träger 63 drehbar gelagert, der im Gestell 1 in Richtung der Achse 9 der Trommel 2 verschiebbar ist. Hiezu ist der Träger 63 an seinem einen Ende mittels der Umlenkwalze 60 verschiebbar auf die Profilwelle 62 aufgesetzt und an seinem anderen Ende mittels Rollen 64 in einer Schiene 65 des Gestelles 1 geführt. Mittels eines Exzentertriebes 66, der über eine Kegelradgetriebe 67 und eine Kette 68 von einem Kettenrad 69 angetrieben wird, wird der Träger 63 zu einer hin- und hergehenden Bewegung in Richtung der Achse 9 der Trommel 2 angetrieben. Hiezu ist das auf die Welle 8 der Trommel 2 drehbar aufgesetzte Kettenrad 69 drehschlüssig mit einem weiteren Kettenrad 70 verbunden, das mittels einer Kette 71 von einem auf die Abtriebswelle 5 des Elektromotors 3 drehfest aufgesetzten Kettenrad 72 angetrieben wird. Die erwähnte Hin- und Herbewegung des Trägers 63 in Richtung der Profilwelle 62 und damit in Richtung der Achse 9 der Trommel 2 überlagert sich mit der erwähnten Beschleunigung bzw. Verzögerung des Bandes 59 zu einer kreisenden Bewegung von nicht dargestellten Vertiefungen des Bandes 59 relativ zur Trommel 2 bzw. deren Aufnahmeöffnungen 12, wodurch die bekannte kreisende Wirkbewegung auf die in den Aufnahmeöffnungen 12 befindlichen Teigstücke ausgeübt wird. Die einzelnen Bewegungskomponenten sind so gewählt, daß jeweils eine der nicht dargestellten Vertiefungen am äußeren Umfang des Bandes 59 über eine der Aufnahmeöffnungen 12 zu liegen kommt und mit dieser in Richtung des Pfeiles 28 umläuft. Die erwähnte Beschleunigung bzw. Verzögerung des Bandes 59 ist durch einen Doppelpfeil 73 angedeutet. Zur sinnvollen Durchführung des Wirkvorganges muß das Band 59 ferner in einem geringen Abstand vom Umfang 11 der Trommel 2 gehalten werden, was dadurch erzielt wird, daß die Seitenränder des Bandes 59 in entsprechend geformten Nuten seitlicher Wangen 74 des Trägers 63 geführt sind.

Das Eindrückwerkzeug 15 und sein Antrieb 75 sind in Fig.2 genauer dargestellt. Das Eindrückwerkzeug 15 hat einen fächerförmigen, das eigentliche Werkzeug bildenden Grundkörper 76, dessen dem Einfülltrichter 14 (Fig.1) zugewendeter Umfangsteil 77 nach einem Kreisbogen geformt ist, dessen Mittelpunkt in der Achse 17 liegt, um welche das Eindrückwerkzeug 15 schwenkbar ist. Dieser kreisbogenförmig ausgebildete Umfangsteil 77 liegt an dem flanschartig verbreiterten unteren Ende 78 des Einfülltrichters 14 flächig an, welches Ende nach der gleichen Kreisbogenfläche geformt ist. Dadurch bildet der Grundkörper 76 in seiner Eindrückstellung, in welcher der Teig in die Aufnahmeöffnungen 12 eingedrückt wird, einen sicheren Abschluß des Einfülltrichters 14 nach unten. Der Grundkörper 76 ist an seinem dem Umfangsteil 77 abgewendeten Ende mit einer Verbreiterung 79 ausgebildet, die nach einem Kreisbogen geformt ist, dessen Mittelpunkt ebenfalls in der Achse 17 liegt, wobei diese Verbreiterung 79 flächig an einer nach dem gleichen Kreisbogen geformten Gehäusewand 80 (Fig.1) anliegt, welche die Kammer 25 nach unten abschließt. Dadurch kann kein Teig nach unten aus der Kammer 25 entweichen. Zugleich bildet die verhältnismäßig stark ausgebildete Gehäusewand 80 eine gute Lagerung für die Welle 16. Ferner bildet die Gehäusewand 80 zusammen mit dem flanschartig verbreiterten unteren Ende 78 des Einfülltrichters 14 eine Führung für die Brille 27, in der diese seitlich aus dem Gestell 1 herausziehbar ist.

Der Grundkörper 76 hat einen Einsatz 81 (Fig.2), welcher den hydraulischen Dämpfer 85 aufnimmt. Hiezu hat derEinsatz 81 eine Bohrung 82, die als Zylinder für einen Kolben 83 dient, der in dieser Bohrung 82 durch eine Dichtung 84 abgedichtet geführt ist und durch eine Feder 86 ständig in Anlage an eine am Schwenkteil 18 gelagerte Rolle 87 gehalten wird. Die Bohrung 82 bildet einen Druckraum 88, von welchem zwei Bohrungen 89,90 zum Umfang des Ansatzes 81 führen. In einer (90) dieser Bohrungen sitzt ein federbelastetes Rückschlagventil 91. An die beiden Bohrungen 89,90 sind von biegsamen Druckschläuchen gebildete Leitungen 92,93 angeschlossen, von denen die Leitung 93 unmittelbar zu einem Speicher 94 für hydraulische Flüssigkeit führt, wogegen die Leitung 92 zu einem einstellbaren Druckregelventil 95 und von diesem zum Speicher 94 führt.

Ein an der Verbreiterung 79 des Grundkörpers 76 seitlich angebrachter Mitnehmer 96 dient zur Rückführung des Grundkörpers 76 nach Vollführung des Druckhubes in seine Ausgangsstellung, wobei dieser Mitnehmer 96 von dem Schwenkteil 18 beaufschlagt wird.

Im Normalbetrieb wirkt der Antrieb 75 auf den Schwenkteil 18, welcher über den federbelasteten Kolben 83 des hydraulischen Dämpfers 85 den Grundkörper 76 des Eindrückwerkzeuges 15 vor sich hertreibt, solange der auf den Teig in der Kammer 25 wirkende Druck nicht zu groß ist. Überschreitet dieser Druck einen vorbestimmten, am Druckregelventil 95 einstellbaren Druck, so wird der Kolben 83 entgegen der Wirkung der Feder 86 in die Richtung 82 während des Druckhubes des Schwenkteiles 18 hineingedrückt, so daß der Grundkörper 76 des Eindrückwerkzeuges 15 keinen oder einen nur geringeren Druckhub vollführt als zuvor. Hiebei wird Drucköl aus dem Druckraum 88 über die Leitung 92 und das Druckregelventil 95 in den Speicher 94 gedrückt. Dadurch wird eine übermäßige Teigbeanspruchung vermieden. Sobald der Schwenkteil 18 durch den Antrieb 75 wieder zum Rückwärtshub angetrieben wird, wird der Kolben 83 durch die Feder 86 aus dem Druckraum 88 wieder herausgedrückt, bis eine Stellung erreicht ist, in welcher der Schwenkarm 18 am Mitnehmer 96 anliegt. Das hierbei im Druckraum 88 erzeugte Vakuum saugt über die Leitung 93 und das Rückschlagventil 91 Drucköl aus dem Speicher 94 wieder an.

Wie Fig.1 zeigt, liegt die Welle 16 bzw. ihre Achse 17 zumindest annähernd dort, wo sich die gedachten Verlängerungen der Wände 97,98 des Einfülltrichters 14 schneiden, von denen die Wand 97 die der Trommel 2 benachbarte Wand dieses Trichters 14 ist, die Wand 98 die gegenüberliegende Wand. Dadurch liegt die Welle 16 verhältnismäßig nahe an der Trommel 2, so daß das gesamte Eindrückwerkzeug 15 und sein Antrieb 75 unter dem Einfülltrichter 14 Platz finden. In der Draufsicht gesehen, liegt hiebei die Schwenkachse 17 des Eindrückwerkzeuges 15 unterhalb jener Hälfte der Kammer 25, welche der Trommel 2 benachbart ist. Dadurch ergibt sich eine kurze Baulänge der Maschine, gemessen in horizontaler Richtung normal zur Trommelachse 9. Zweckmäßig verläuft die Wand 97 vertikal, die Wand 98 schräg, und zwar derart, daß die Vorderkante 99 (Fig.1) des Grundkörpers 76 des Eindrückwerkzeuges 15 bei völlig zurückgezogenem Eindrückwerkzeug eine Verlängerung der Wand 98 bildet, so daß der im Einfülltrichter 14 befindliche Teig ungehindert in die Kammer 25 rutschen kann. Die Fächerform des Grundkörpers 76 bewirkt beim Druckhub des Eindrückwerkzeuges 15 einen verläßlichen Abschluß des Einfülltrichters 14, sobald die vorlaufende Ecke 100 an der Ecke 101 des unteren Trichterendes 78 vorbeigelaufen ist.

Der Grundkörper 76 des Eindrückwerkzeuges erstreckt sich - in Trommelachsrichtung gemessen - über alle Aufnahmeöffnungen 12 einer Reihe und liegt mit den beiden Seitenflächen flächig an den Seitenwänden der Kammer 25 an.

Wie Fig.1 zeigt, ist das Eindrückwerkzeug 15 und sein Antrieb 75 - in der Draufsicht gesehen - in allen Betriebsstellungen durch andere Maschinenteile abgedeckt, insbesondere durch den Einfülltrichter 14. Hiedurch ergibt sich eine gedrängte Bauweise.

## Patentansprüche

1. Vorrichtung zum Portionieren von Teig, mit einer in einem Gestell (1) um eine horizontale Achse (9) drehbar gelagerten Trommel (2), die an ihrem Mantel, vorzugsweise in zur Trommelachse (9) parallelen Reihen, angeordnete Aufnahmeöffnungen (12) für den Teig hat, in denen Kolben (43) in radialer Richtung der Trommel (2) beweglich geführt sind, in welche Aufnahmeöffnungen (12) der Teig aus einer an einen Einfülltrichter (14) anschließenden Kammer (25) mittels eines Eindrückwerkzeuges (15) in seitlicher Richtung eingedrückt wird, das durch einen Antrieb (75) zu einer hin- und hergehenden Bewegung angetrieben wird, dadurch gekennzeichnet, daß das Eindrückwerkzeug (15) um eine einzige, horizontale, zur Achse (9) der Trommel (2) parallele, unterhalb der Kammer (25) angeordnete Achse (17) schwenkbar im Gestell (1) gelagert ist.

2. Vorrichtung nach Anspruch 1, dadurch gekennzeichnet, daß die Achse (17), um welche das Eindrückwerkzeug (15) schwenkbar ist, in der Draufsicht gesehen, unter jener Hälfte der Kammer (25) liegt, welche der Trommel (2) benachbart ist.

3. Vorrichtung nach Anspruch 1 oder 2, dadurch gekennzeichnet, daß die Achse (17), um welche das Eindrückwerkzeug (15) schwenkbar ist, zumindest annähernd im Schnittpunkt zweier gedachter Verlängerungen zweier Wände (97,98) des Einfülltrichters (14) liegt, von denen die eine Wand (97) die der Trommel (2) benachbarte, vorzugsweise vertikal verlaufende, Wand ist, wogegen die andere Wand (98) der erstgenannten Wand (97) gegenüberliegt.

4. Vorrichtung nach Anspruch 1,2 oder 3, dadurch gekennzeichnet, daß das Eindrückwerkzeug (15) mit einem um dieselbe Achse (17) hin und her schwingenden Schwenkteil (18) über einen hydraulischen Dämpfer (85) gekuppelt ist, wobei der Antrieb (75) auf den Schwenkteil (18) und dieser über den hydraulischen Dämpfer (85) auf das Eindrückwerkzeuge (15) beim Eindrücken des Teiges in die Aufnahmeöffnungen (12) einwirkt und wobei das Eindrückwerkzeug (15) und der Schwenkteil (18) über einen Mitnehmer (96) bei der Rückzugbewegung des Schwenkteiles (18) gekuppelt sind (Fig.2).

5. Vorrichtung nach Anspruch 4, dadurch gekennzeichnet, daß der hydraulische Dämpfer (95) einen durch eine Feder (86) belasteten Kolben (83) hat, der in einem im Eindrückwerkzeug (15) vorgesehenen Druckraum (88) geführt ist und am Schwenkteil (18) anliegt, wobei dieser Druckraum (88) einerseits über eine mit einem Rückschlagventil (91) versehene Leitung (93), anderseits über eine weitere, mit einem, vorzugsweise einstellbaren, Druckregelventil (95) versehene Leitung (92) mit einem Speicher (94) für hydraulische Flüssigkeit in Verbindung steht.

6. Vorrichtung nach Anspruch 5, dadurch gekennzeichnet, daß das freie Stirnende des Kolbens (83) am Schwenkteil (18) unter Vermittlung einer am Schwenkteil (18) gelagerten Rolle (87) anliegt (Fig.2).

7. Vorrichtung nach einem der Ansprüche 1 bis 6, dadurch gekennzeichnet, daß das Eindrückwerkzeug (15) an seinem dem Trichter (14) zugewendeten Umfangsteil (77) nach einem Kreisbogen geformt ist, dessen Mittelpunkt in der Achse (17) liegt, um welche das Eindrückwerkzeug (15) schwenkbar ist, wobei dieser Umfangsteil (77) am entlang eines Kreisbogens verlaufenden unteren Ende (78) des Trichters (14) flächig anliegt.

8. Vorrichtung nach einem der Ansprüche 1 bis 7, dadurch gekennzeichnet, daß das Eindrückwerkzeug (15) mit einer Verbreiterung (79) auf einer Welle (16) drehbar gelagert ist, wobei der untere Umfangsteil dieser Verbreiterung (79) nach einem Kreisbogen geformt ist, dessen Mittelpunkt in der Achse (17) der Welle (16) liegt, und wobei diese Verbreiterung (79) flächig an einer ebenfalls kreisbogenförmig verlaufenden Gehäusewand (80) anliegt, welche die Kammer (25) unten abschließt.

9. Vorrichtung nach Anspruch 8, dadurch gekennzeichnet, daß die kreisbogenförmig verlaufende Gehäusewand (80) an eine zwischen der Kammer (25) und der Trommel (2) liegende, mit einer Durchgangsöffnung (26) für den Teig versehene Brille (27), vorzugsweise aus Kunststoff, anschließt, die aus dem Gestell (1) in Richtung der Achse (9) der Trommel (2) herausziehbar ist.

10. Vorrichtung nach einem der Ansprüche 1 bis 9, dadurch gekennzeichnet, daß das Eindrückwerkzeug (15) fächerförmige Gestalt mit einer die Achse (17) umgebenden Verbreiterung (79) hat.

11. Vorrichtung nach einem der Ansprüche 1 bis 10, dadurch gekennzeichnet, daß - in Draufsicht gesehen - das Eindrückwerkzeug (15) und sein Antrieb (75) zur Gänze durch andere Bauteile der Vorrichtung, insbesondere den Einfülltrichter (14), abgedeckt sind.

## Claims

1. A device for portioning dough, with a drum (2) which is mounted in a frame (1) so as to be rotatable about a horizontal axis (9) and which has receiving holes (12) for the dough arranged in its casing, preferably in rows running parallel to the drum axis (9), pistons (43) being guided in these receiving holes (12) so as to be movable in the radial direction of the drum (2), and the dough being pressed laterally into these receiving holes (12) from a chamber (25), adjoining a feeding hopper (14), by means of a pressing tool (15), which is driven in a backward and forward motion by a drive mechanism (75), characterised in that the pressing tool (15) is mounted in the frame (1) so as to swivel about a single horizontal axis (17), which runs parallel to the axis (9) of the drum (2) and is arranged beneath the chamber (25).

2. A device according to Claim 1, characterised in that - when seen in plan view - the axis (17), about which the pressing tool (15) swivels, is located beneath the half of the chamber (25) which is adjacent to the drum (2).

3. A device according to Claim 1 or 2, characterised in that the axis (17), about which the pressing tool (15) swivels, is located at least approximately at the point of intersection of two imaginary extensions of two walls (97,98) of the feeding hopper (14), the first wall (97) being the wall which is adjacent to the drum (2) and preferably extends vertically, whilst the other wall (98) is located opposite the first-mentioned wall (97).

4. A device according to Claim 1, 2 or 3, characterised in that the pressing tool (15) is coupled with a swivelling part (18), which swings backwards and forwards about the same axis (17), via a hydraulic damper (85), the drive mechanism (75) acting on the swivelling part (18) and the latter acting on the pressing tool (15) via the hydraulic damper (85) as the dough is pressed into the receiving holes (12), and the pressing tool (15) and the swivelling part (18) being coupled via a catch (96) during the return movement of the swivelling part (18) (Fig. 2).

5. A device according to Claim 4, characterised in that the hydraulic damper (85) has a piston (83) loaded by a spring (86), is guided in a pressure space (88) provided in the pressing tool (15), and rests against the swivelling part (18), this pressure space (88) being connected to a reservoir (94) for hydraulic fluid firstly via a pipeline (93) provided with a non-return valve (91) and secondly via a further pipeline (92) provided with a pressure-regulating valve (95), which is preferably adjustable.

6. A device according to Claim 5, characterised in that the free front end of the piston (83) rests against the swivelling part (18) via a roller (87) mounted on the swivelling part (18). (Fig. 2).

7. A device according to any one of Claims 1 to 6, characterised in that the peripheral part (77) of the pressing tool (15) facing the hopper (14) has the form of a circular arc, and the centre point of this circular arc is located in the axis (17) about which the pressing tool (15) swivels, this peripheral part (77) lying face-to-face against the lower end (78) of the hopper (14), which extends in a circular arc.

8. A device according to any one of Claims 1 to 7, characterised in that the pressing tool (15) is mounted rotatably on a shaft (16) by means of an enlargement (79), the lower peripheral part of this enlargement (79) having the form of a circular arc, whose centre point is located in the axis (17) of the shaft (16), and this enlargement (79) lying face-to-face against a housing wall (80), which also extends in the form of a circular arc and which terminates the chamber (25) at the bottom.

9. A device according to Claim 8, characterised in that the circular-arc-shaped housing wall (80) adjoins a stop plate (27), preferably made of synthetic material, which is located between the chamber (25) and the drum (2) and is provided with a through hole (26) for the dough, and which can be pulled out of the frame (1) in the direction of the axis (9) of the drum (2).

10. A device according to any one of Claims 1 to 9, characterised in that the pressing tool ( 15) has a fan-shaped design with an enlargement (79) which encloses the axis (17).

11. A device according to any one of Claims 1 to 10, characterised in that - when seen in plan view - the pressing tool (15) and its drive mechanism (75) are completely covered by other components of the device, in particular the feeding hopper (14).

## Revendications

1. Dispositif pour préportionner la pâte, avec un tambour (2) logé dans un châssis (1) avec capacité de rotation autour d'un axe horizontal (9) et qui présente sur son enveloppe, disposées de préférence en rangées parallèles à l'axe (9) du tambour, des ouvertures de réception (12) de la pâte dans lesquelles des pistons (43) sont guidés avec capacité de mouvement dans le sens radial du tambour (2), la pâte étant introduite en pression suivant une direction latérale dans lesdites ouvertures de réception (12) à partir d'une chambre (25) contiguë à un entonnoir d'alimentation (14) à l'aide d'un outil d'introduction (15) commandé en un mouvement de va-et-vient par un dispositif moteur (75), caractérisé en ce que l'outil d'introduction (15) est logé dans le châssis (1) avec capacité de pivotement autour d'un axe (17) unique, horizontal, parallèle à l'axe (9) du tambour (2), et disposé en-dessous de la chambre (25).

2. Dispositif selon la revendication 1, caractérisé en ce que, vu de dessus, l'axe (17) autour duquel pivote l'outil d'introduction (15) est situé en-dessous de cette moitié-là de la chambre (25) qui avoisine le tambour (2).

3. Dispositif selon la revendication 1 ou 2, caractérisé en ce que l'axe (17) autour duquel pivote l'outil d'introduction (15) est situé au moins approximativement dans le point d'intersection de deux prolongements idéels de deux parois (97, 98) de l'entonnoir d'alimentation (14) dont l'une paroi (97) est la paroi voisine du tambour (2) et qui s'étend verticalement de préférence, tandis que l'autre paroi (98) est située à l'opposé de cette première paroi (97).

4. Dispositif selon une quelconque des revendications 1, 2 ou 3, caractérisé en ce que l'outil d'introduction (15) est couplé par l'intermédiaire d'un amortisseur hydraulique (85) à un élément pivot (18) oscillant autour du même axe (17), où le dispositif moteur (75) agit sur l'élément pivot (18) et celui-ci, par l'intermédiaire de l'amortisseur hydraulique (85), sur l'outil d'introduction (15) lors de l'introduction de la pâte dans les ouvertures de réception (12), et où l'outil d'introduction (15) et l'élément pivot (18) sont couplés par l'intermédiaire d'un organe d'entraînement (96) lors du mouvement de retrait de l'élément pivot (18) (fig. 2).

5. Dispositif selon la revendication 4, caractérisé en ce que l'amortisseur hydraulique (85) possède un piston (83) chargé par un ressort (86) et guidé dans un espace de compression (88) prévu dans l'outil d'introduction (15), et qui vient plaquer sur l'élément pivot (18), ledit espace de compression (88) étant relié à un accumulateur (94) de liquide hydraulique par l'intermédiaire d'une conduite (93) munie d'un clapet anti-retour (91), d'une part, et par l'intermédiaire d'une autre conduite (92) munie d'une soupape de régulation de pression (95), réglable de préférence, d'autre part.

6. Dispositif selon la revendication 5, caractérisé en ce que la face en bout libre du piston (83) vient plaquer sur l'élément pivot (18) par l'intermédiaire d'un rouleau (87) logé sur l'élément pivot (18) (fig. 2).

7. Dispositif selon une quelconque des revendications 1 à 6, caractérisé en ce que l'outil d'introduction (15) est dans sa partie périphérique (77) tournée vers l'entonnoir (14) réalisé suivant une forme d'arc de cercle dont le centre se situe dans l'axe (17) autour duquel pivote l'outil d'introduction (15), cette partie périphérique (77) venant plaquer avec ses surfaces contre l'extrémité inférieure (78) de l'entonnoir (14) qui s'étend le long d'un arc de cercle.

8. Dispositif selon une quelconque des revendications 1 à 7, caractérisé en ce que l'outil d'introduction (15) est par un élargissement (79) logé avec capacité de rotation sur un arbre (16), où la partie périphérique inférieure de cet élargissement (79) est conformée suivant un arc de cercle dont le centre se situe dans l'axe (17) de l'arbre (16), et où cet élargissement (79) vient plaquer avec ses surfaces sur une paroi de boîtier (80) qui s'étend également suivant une forme d'arc de cercle et qui ferme la chambre (25) en bas.

9. Dispositif selon la revendication 8, caractérisé en ce que la paroi de boîtier (80) qui s'étend suivant une forme d'arc de cercle est contiguë à une lunette (27) en matière plastique de préférence, disposée entre la chambre (25) et le tambour (2) et munie d'une ouverture de passage (26) de la pâte, et qui peut être retirée hors du châssis (1) dans la direction de l'axe (9) du tambour (2).

10. Dispositif selon une quelconque des revendications 1 à 9, caractérisé en ce que l'outil d'introduction (15) possède une forme d'éventail avec un élargissement (79) qui entoure l'axe (17).

11. Dispositif selon une quelconque des revendications 1 à 10, caractérisé en ce que - vu de dessus - l'outil d'introduction (15) et son dispositif moteur (75) sont dans leur totalité recouverts par d'autres éléments de construction du dispositif, en particulier par l'entonnoir d'alimentation (14).
